# NEUE EUROPÄISCHE PATENTSCHRIFT

(11) **EP 0 960 802 B2**
(45) Veröffentlichungstag und Bekanntmachung des Hinweises auf die Entscheidung über den Einspruch: **17.12.2008**
(45) Hinweis auf die Patenterteilung: 07.08.2002
(21) Anmeldenummer: 99117536.5
(22) Anmeldetag: 04.03.1998
(51) Int. Cl.: B62D 65/00

(54) **Fahrzeugdach**
Vehicle roof
Toit de véhicule

(30) Priorität: 06.03.1997 DE 19709016
(43) Veröffentlichungstag der Anmeldung: 01.12.1999
(62) Teilanmeldung aus: 98916841.4
(73) Patentinhaber: ArvinMeritor GmbH, 63128 Dietzenbach (DE)
(72) Erfinder: Böhm. Horst, 60599 Frankfurt (DE); Grimm, Rainer, 60599 Frankfurt (DE); Becher, Thomas, 63110 Rodgau (DE)
(74) Vertreter: Oppermann, Mark

(56) Entgegenhaltungen:
- DE-A- 3 429 880
- DE-A1- 1 630 940
- DE-A1- 2 929 689
- DE-A1- 19 529 521
- DE-C1- 19 529 523
- DE-C2- 3 202 594
- FR-A- 2 529 844
- FR-A- 2 701 677
- GM-U1- 7 929 367
- US-A- 4 358 883
- US-A- 4 811 985

## Beschreibung

Die Erfindung bezieht sich auf ein Fahrzeugdach, insbesondere Kraftfahrzeugdach, entsprechend dem Oberbegriff des Patentanspruchs 1.

Bei herkömmlichen Fahrzeugkarosserien ist das Fahrzeugdach, das eine Dachöffnung aufweisen kann, der ein verlagerbarer Deckel oder ein Faltdach zugeordnet sein kann, ein fester in die Karosserie integrierter Bestandteil, der sich unmittelbar an die Säulen der Karosserie anschließt. Bei derartigen Karosserien sind der Dachhimmel und ggf. weitere Verkleidungsteile sowie andere im Dachbereich anzubringende Fahrzeugteile, insbesondere Schiebe- oder Faltdachelemente nachträglich und vorwiegend vom Fahrzeuginnenraum her zu montieren (vergl. DE 44 28 913 A1).

Es sind aber auch bereits Fahrzeugdächer vorgeschlagen worden, die als Module getrennt von der Fahrzeugkarosserie hergestellt und mit ihren Außenrändern auf einen an den Karosseriesäulen angebrachten Karosserierahmen aufgelegt und mit diesem durch Kleben oder Schrauben fest verbunden werden (z.B. EP 0 075 754 A1). In diesem Zusammenhang wird in der gattungsbildenden DE 28 45 708 A1 ein Fahrzeugdach offenbart, das als vorgeformte Sandwichplatte ausgebildet ist, die an der Außenseite eine Dachhaut und an der Innenseite ein Polster- und/oder Bezugsmaterial als Dachhimmel aufweist. Durch die Vormontage werden die Montagezeiten am Endmontageband verkürzt. Eine Schiebedacheinheit ist an diesem Fahrzeugdach nicht vorgesehen.

Der Erfindung liegt ausgehend vom gattungsbildenden Stand der Technik die Aufgabe zugrunde, ein auch eine schnelle und leichte Montage einer Schiebedacheinheit gestattendes Fahrzeugdach zu schaffen, welches einfach ausgebildet und herstellbar ist.

Die gestellte Aufgabe wird erfindungsgemäß durch die Merkmale des Patentanspruchs 1 gelöst. Vorteilhafte bzw. zweckmäßige Weiterbildungen der Erfindung sind Gegenstand der Patentansprüche 2 bis 9.

Gemäß der Erfindung ist bei einem Fahrzeugdach, das sandwichartig mit einer Dachhaut ausgebildet, getrennt von der Fahrzeugkarosserie hergestellt, mit seinen Dachrändern auf einen Karosserierahmen auflegbar und mit diesem fest verbindbar ist, die mit einer Dachöffnung versehene Dachhaut mit einem Schaumkunststoff ausgeschäumt, wobei in dem Schaumkunststoff ein die Dachöffnung umgebender Verstärkungsrahmen eingebettet ist, an dem unterhalb der Dachhaut ein Schiebedachrahmen befestigt ist, an welchem ein als Innenschale vorgeformter Dachhimmel angebracht ist, der über die Außenränder des Fahrzeugdachs übersteht, für den Durchtritt durch die von dem Karosserierahmen begrenzte Karosserieöffnung unter partieller Faltung in den Eckbereichen nach unten ohne bleibende Deformationen umbiegbar und zur Verkleidung des Karosserierahmens und des Schiebedachrahmens ausgebildet ist.

Nach der Lehre des Patentanspruchs 2 weist der Schiebedachrahmen in vorteilhafter Weise einen Flansch auf, der an einer unteren Fläche des Verstärkungsrahmens unmittelbar flächig anliegt und der Befestigung des Schiebedachrahmens an dem Verstärkungsrahmen dient.

Die Innenschale ist entsprechend dem Patentanspruch 3 an dem Schiebedachrahmen vorteilhaft mittels eines Aufsteckkeders befestigt, der sowohl auf einen Flansch des Schiebedachrahmens als auch auf einen Öffnungsrand der Innenschale aufgesteckt ist.

In einer vorteilhaften Weiterbildung der Erfindung gemäß dem Patentanspruch 4 wird über einen Randspalt zwischen der Dachhaut und einem Schiebedeckel eintretendes und von dem Schiebedachrahmen aufgefangenes Wasser nach außen abgeleitet, durch ein in einem Eckbereich des Schiebedachrahmens in die an der Unterseite der Dachhaut angebrachten Schaumschicht eingebettetes Schlauch- oder Rohrstück, das einerseits auf eine Abflußtülle des Schiebedachrahmens dicht aufgesteckt ist und andererseits mit einer Öffnung an einer Außenkante des Fahrzeugdachs endet. Vorzugsweise mündet das Schlauch- oder Rohrstück an der Außenkante des Fahrzeugdachs in eine Wasserablauffuge, die zwischen einem Außenrand der Dachhaut und der ihm zugekehrten Fläche des Karosserierahmens gebildet ist, wie im Patentanspruch 5 angegeben.

Entsprechend dem Patentanspruch 6 sind die Dachränder in ihren zur Auflage auf den Karosserierahmen vorgesehenen Bereichen mit in den Schaumkunststoff eingebetteten Verstärkungsteilen in Form von vorzugsweise durchgehenden Profilen versehen, um für eine Aussteifung des Fahrzeugdachs zu sorgen. Hierbei kann das jeweilige Verstärkungsteil mit einer unteren freiliegenden Fläche an dem Karosserierahmen unmittelbar flächig anliegen, wie im Patentanspruch 7 angegeben. Nach der Lehre des Patentanspruchs 8 ist das Fahrzeugdach mit dem Karosserierahmen vorteilhaft durch Befestigungsschrauben fest verbunden, die durch einen Flansch des Karosserierahmens hindurchgeführt und in das jeweilige Verstärkungsteil eingeschraubt sind.

Schließlich handelt es sich gemäß dem Patentanspruch 9 bei dem Schaumkunststoff vorzugsweise um einen PUR-Schaumstoff.

Weitere Einzelheiten der Erfindung werden anhand der unterschiedliche Ausführungsformen darstellenden Zeichnungen näher erläutert. Darin zeigt:

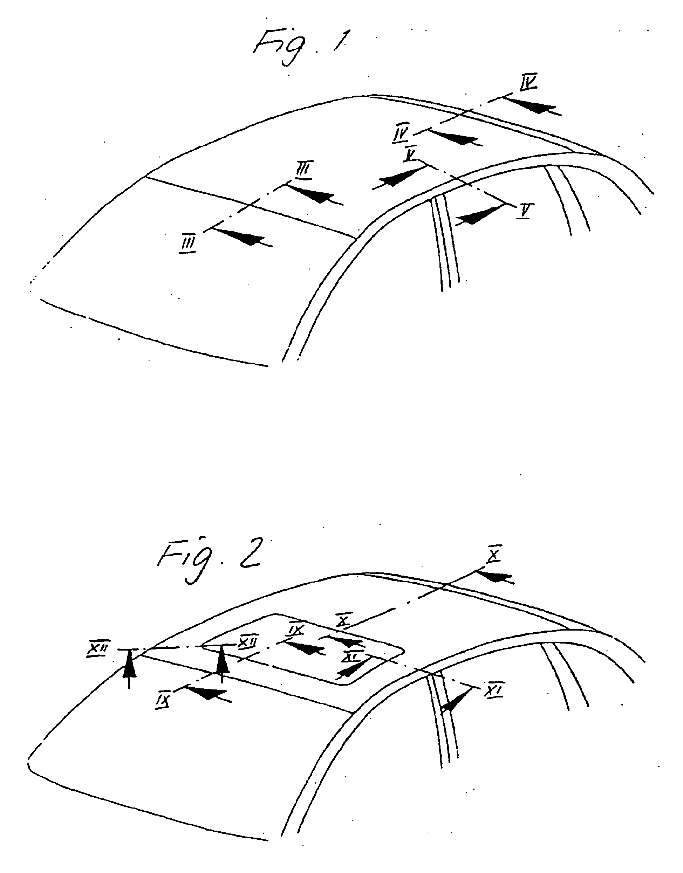

- Fig. 1: eine schematische Perspektivansicht eines schon an einer PKW-Karosserie angebrachten Fahrzeugdachs, ohne Schiebedach, nicht zur Erfindung gehörig,
- Fig. 2: eine der Fig. 1 entsprechende Perspektivansicht, jedoch mit einer in das Fahrzeugdach eingebauten Schiebedacheinheit;
- Fig. 3: einen abgebrochenen Schnitt entsprechend der Linie III-III in Fig. 1 nicht zur Erfindung gehörend,
- Fig. 4: einen abgebrochenen Schnitt entsprechend der Linie IV-IV in Fig. 1 nicht zur Erfindung gehörend,
- Fig. 5: einen abgebrochenen Schnitt entsprechend der Linie V-V in Fig. 1 nicht zur Erfindung gehörend,
- Fig. 6: einen der Fig. 3 ähnlichen Schnitt betreffend eine weiteres Fahrzeugdach, nicht zur Erfindung gehörend,
- Fig. 7: einen der Fig. 4 ähnlichen Schnitt betreffend das Fahrzeugdach aus Fig.6, nicht zur Erfindung gehörend,
- Fig. 8: einen der Fig. 5 ähnlichen Schnitt betreffend das Fahrzeugdach aus Fig 6 und 7, nicht zur Erfindung gehörend,
- Fig. 9: einen abgebrochenen Schnitt entsprechend der Linie IX-IX in Fig. 2 betreffend eine Ausführungsform, der Erfindung mit eingebautem Schiebedach,
- Fig. 10: einen abgebrochenen Schnitt entsprechend der Linie X-X in Fig. 2 betreffend die Ausführungsform der Erfindung aus Fig.9,
- Fig. 11: einen abgebrochenen Schnitt entsprechend der Linie XI-XI in Fig. 2 betreffend die Ausführungsform der Erfindung aus Fig. 9,
- Fig. 12: einen abgebrochenen Schnitt entsprechend der Linie XII-XII in Fig. 2 betreffend die Ausführungsform der Erfindung aus Fig. 9,
- Fig. 13: einen der Fig. 5 ähnlichen Schnitt; die nur mit dieser Fig. gezeigte Ausführungsform ist nicht Bestandteil der Erfindung,
- Fig. 14: einen der Fig. 5 ähnlichen Schnitt betreffend ein nur in den Fig. 14 und 15 gezeigtes Fahrzeugdach, nicht zur Erfindung gehörend,
- Fig. 15: einen der Fig. 14 ähnlichen Schnitt betreffend ein anderes Ausstattungsdetail des Fahrzeugdachs aus Fig. 14, nicht zur Erfindung gehörend,
- Fig. 16A: eine das Montageverfahren erläuternde Perspektivdarstellung des Fahrzeugdachs vor dem Einbau, nicht der Erfindung gehörend,
- Fig. 16B: das Fahrzeugdach gemäß Fig. 16A, jedoch einbaufertig mit nach unten umgebogenen Bereichen des Dachhimmels bzw. der Innenschale und
- Fig. 16C: eine Perspektivansicht der PKW-Karosserie vor der Dachmontage, nicht zur Erfindung gehörend.

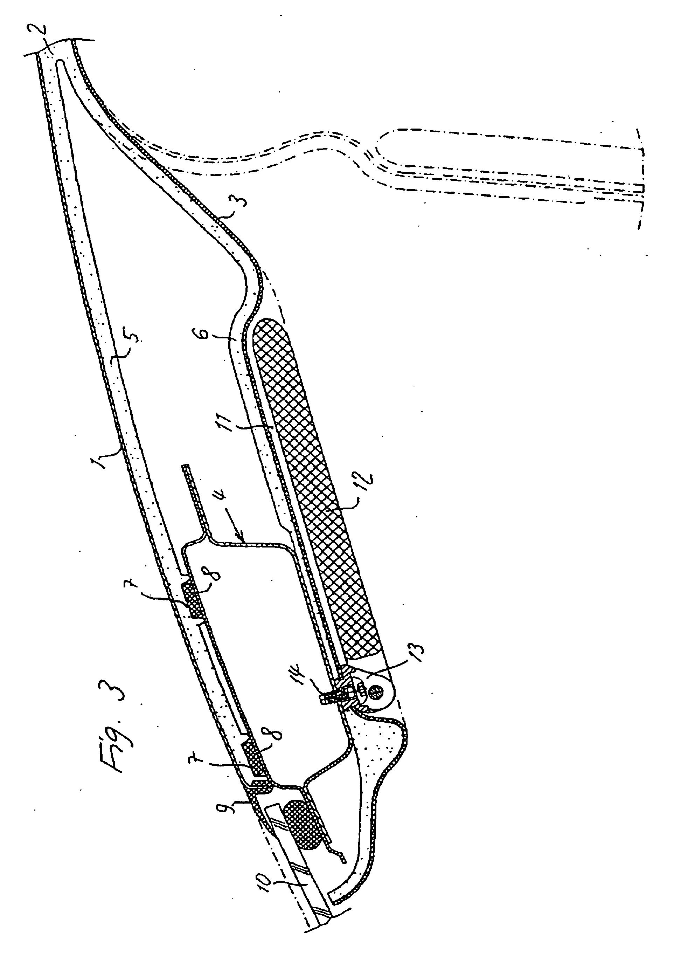

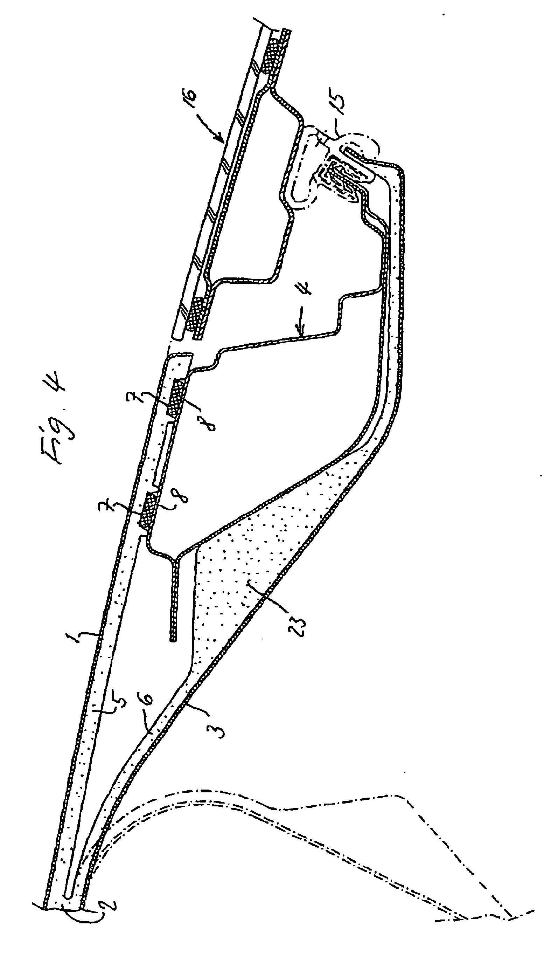

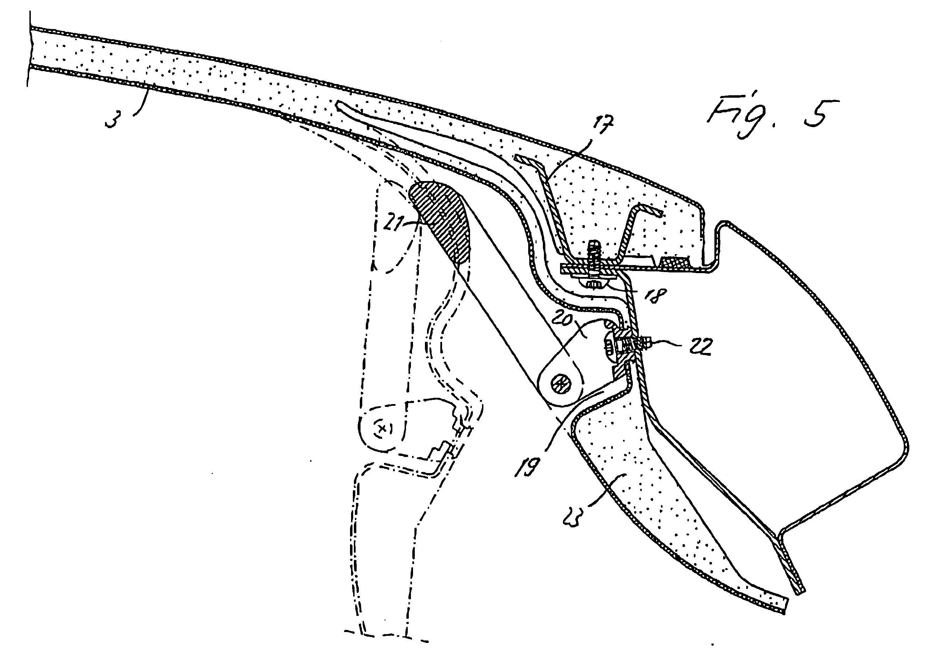

Zur-näheren Erläuterung des Fahrzeugdachs wird zunächst auf die Fig. 3 bis 5, die nicht Bestandteil der Erfindung sind Bezug genommen. Das daraus ersichtliche Fahrzeugdach bestent aus einer aus einem metallischen Werkstoff, z.B. Stahlblech geformten Außenschale oder Dachhaut 1 und einer damit sandwichartig verbundenen Innenschale 2, die aus einem Schaumkunststoff, beispielsweise einem PUR-Schaumstoff gebildet ist. Die Innenfläche der Innenschale 2 ist zur Ausbildung des Dachhimmels mit einem textilen oder folienartigen Bezugsmaterial 3 beschichtet. Wie bei allen hier gezeichneten und beschriebenen Schnittdarstellungen ist der Einbauzustand des Fahrzeugdachs dargestellt, bei dem die Außenränder des Dachs auf den Karosserierahmen 4 aufgelegt sind. In Fig. 3 ist der vordere Querholm, in Fig. 4 der hintere Querholm und in Fig. 5 einer der Seitenholme des Karosserierahmens 4 dargestellt.

Die Innenschale 2 ist im Bereich der zur Auflage auf den Karosserierahmen 4 vorgesehenen Außenränder in zwei Schichten aufgeteilt, von denen die obere Schicht 5 auf den Karosserierahmen 4 aufgelegt ist, während die untere Schicht 6 über die Außenränder des Fahrzeugdachs übersteht. Die untere Schicht 6 ist für den Durchtritt durch die von dem Karosserierahmen 4 begrenzte Karosserieöffnung nach unten ohne bleibende Deformation umbiegbar, wie das in den Fig. in strichpunktierten Linien angedeutet ist. Diese nach unten umbiegbare untere Schicht 6 ist an die nach unten bzw. innen weisenden Flächen des Karosserierahmens 4 angelegt und auf noch zu beschreibende Weise befestigt.

Die obere Schicht 5 ist im Bereich ihrer Auflage auf den Karosserierahmen 4 mit in den Schaumstoff eingeformten Aufnahmenuten 7 für Klebstoff 8 versehen. Auf diese Weise ist das Fahrzeugdach fest mit dem Karosserierahmen 4 verbunden. Im vorderen Bereich ist auf eine Abkantung der Außenschale 1 ein Lippenprofil 9 aufgesteckt, das der Windschutzscheibe 10 anliegt. Die untere Schicht 6 verkleidet den Karosserierahmen 4 vollständig und ist in ihrem vorderen Bereich mit Vertiefungen 11 versehen, welche schwenkbare Sonnenblenden 12 aufnehmen. Die Schwenklagerböcke 13 der Sonnenblenden 12 sind in entsprechende Ausnehmungen in der unteren Schicht 6 und dem Bezugsmaterial 3 verrastet, was eine Vormontage der Sonnenblenden an der Innenschale ermöglicht. Nach dem Verkleiden des Karosserierahmens 4 werden durch die Schwenklagerböcke hindurch Befestigungsschrauben 14 in den Karosserierahmen 4 eingeschraubt.

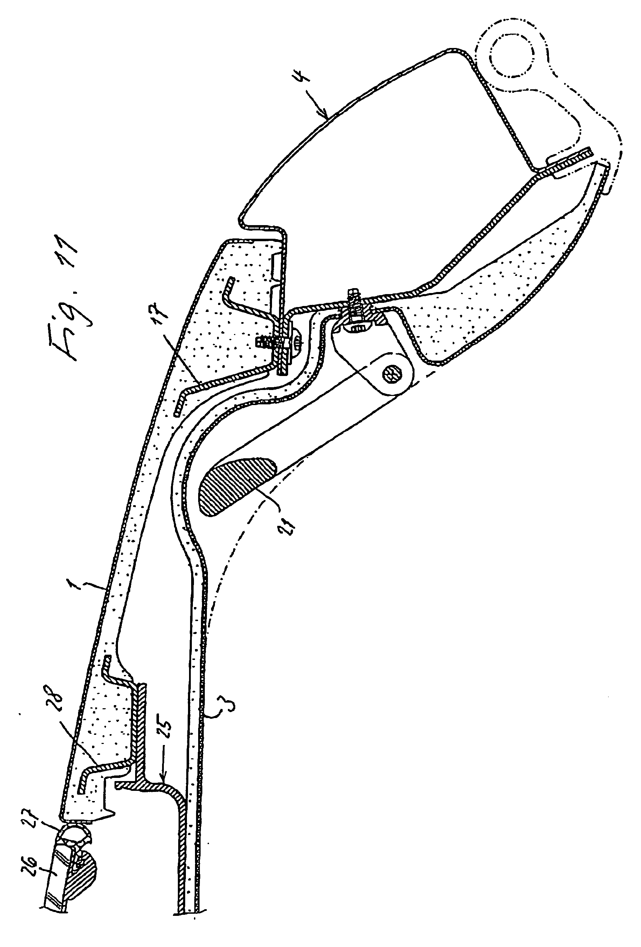

An den aus Fig. 4 ersichtlichen hinteren Querholm des Karosserierahmens 4 ist die untere Schicht 6 angelegt und mit diesem über einen sowohl auf einen Flansch des Querholms als auch auf den Außenrand der unteren Schicht 6 aufgesteckten Keder 15 fest verbunden. Der in Fig. 4 in strichpunktierten Linien dargestellte Keder ist zugleich das Abdichtprofil für die bei diesem Ausführungsbeispiel vorgesehene Heckklappe 16. Wie aus Fig. 5 hervorgeht, ist an den Seiten des Fahrzeugdachs in die obere Schicht 5 ein Verstärkungsteil 17 in Form eines durchgehenden Profils in den Schaumstoff eingebettet. Die untere Fläche des Verstärkungsteils 17 liegt dem Karosserierahmen unmittelbar flächig an. Hier ist das Fahrzeugdach mit den Seitenholmen des Karosserierahmens durch Befestigungsschrauben 18 fest verbunden, die durch einen Flansch des Karosserierahmens 4 hindurchgeführt und in das Verstärkungsteil 17 eingeschraubt sind. Diese Befestigung erfolgt vor der Verkleidung des Karosserierahmens 4 mit der unteren Schicht 6 der Innenschale 2, die auch in Fig. 5 in strichpunktierten Linien nach unten umgebogen dargestellt ist. Außen ist in den Schaumstoff der oberen Schicht 5 zusätzlich eine Aufnahmenut 7 für Klebstoff 8 angebracht. In Fig. 5 ist auch noch dargestellt, daß in Vertiefungen 19 der unteren Schicht 6 Schwenklagerböcke 20 für Haltegriffe 21 in entsprechende Bohrungen der unteren Schicht 6 und des Bezugsmaterials 3 eingerastet sind. Auch die Haltegriffe 21 mit ihren Schwenklagerböcken 20 können daher an dem Fahrzeugdach vormontiert werden. Wie unter Bezugnahme auf Fig. 3 anhand der dort gezeigten Sonnenblenden 12 schon beschrieben wurde, werden auch bei den Haltegriffen 21 Befestigungsschrauben 22 durch die Schwenklagerböcke 20 hindurchgeführt und in den Karosserierahmen 4 eingeschraubt. Zusätzlich zu dieser Befestigung wird noch der Außenrand der unteren Schicht 6 mit einem entsprechenden Flansch des Karosserierahmens 4 durch einen hier nicht gezeigten Keder verbunden, wie er in strichpunktierten Linien in Fig. 11 an dieser Stelle angedeutet ist.

Wie aus den Fig. 3 bis 5 weiterhin hervorgeht, ist die untere Schicht 6 nicht durchweg von gleichbleibender Dicke ausgeführt, sondern entsprechend dem Stabilitäts- bzw. Polsterungsbedürfnis auch in Teilbereichen dickwandiger ausgebildet. Durch entsprechende Ausbildung der Fertigungsform lassen sich derartige unterschiedliche Schichtdicken ohne weiteres erzielen. Weiterhin ist aus den Fig. ersichtlich, daß sich zwischen der oberen Schicht 5 und der unteren Schicht 6 der Innenschale 2 zum Teil erhebliche Hohlräume befinden. Diese können als Kanäle für die Unterbringung von Kabeln, aber auch als Luftkanäle verwendet werden. Die Außenränder der nach unten umbiegbaren Bereiche der Innenschale 2 d.h. der unteren Schicht 6 bei der in Rede stehenden Ausführungsform sind entsprechend ihrer am Karosserierahmen 4 vorgesehenen Befestigung paßgerecht geschnitten bzw. vorgeformt. Die bereits erwähnten Schichtverdickungen der unteren Schicht 6 bilden, wie aus den Fig. 4 und 5 besonders deutlich hervorgeht, stoßabsorbierende Sicherheitselemente 23, die in diesen Bereichen ein direktes Auftreffen von Körperteilen der Fahrzeuginsassen auf den Karosserierahmen 4 verhindern bzw. die Folgen eines Auftreffens mildern.

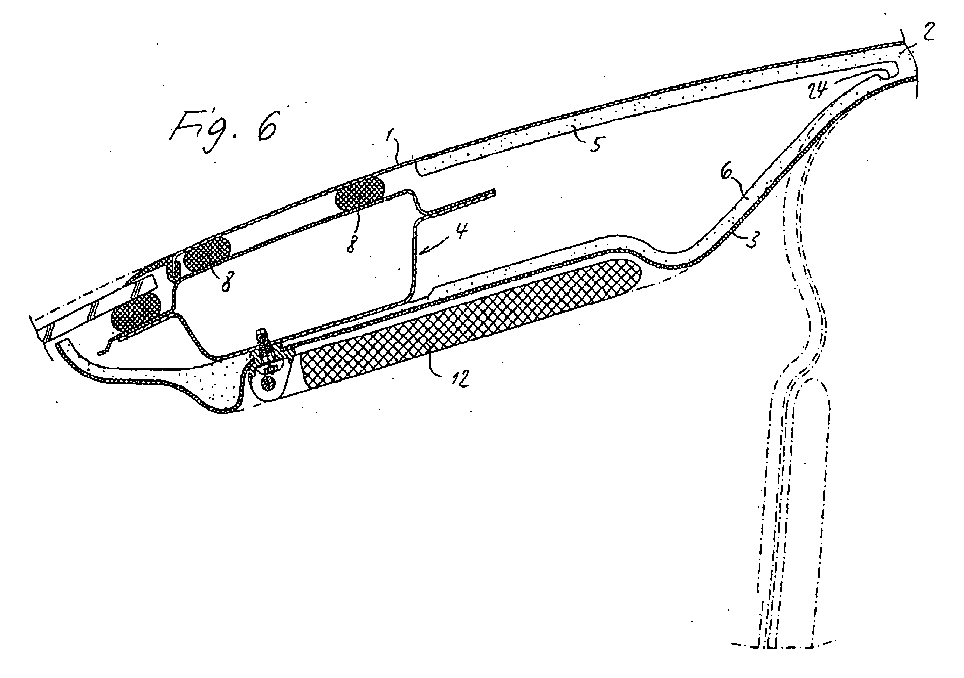

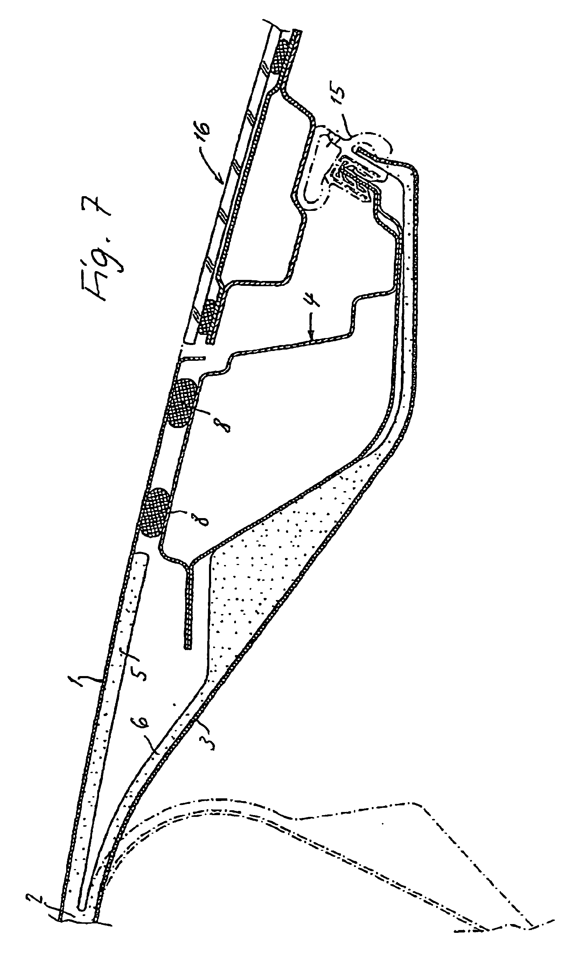

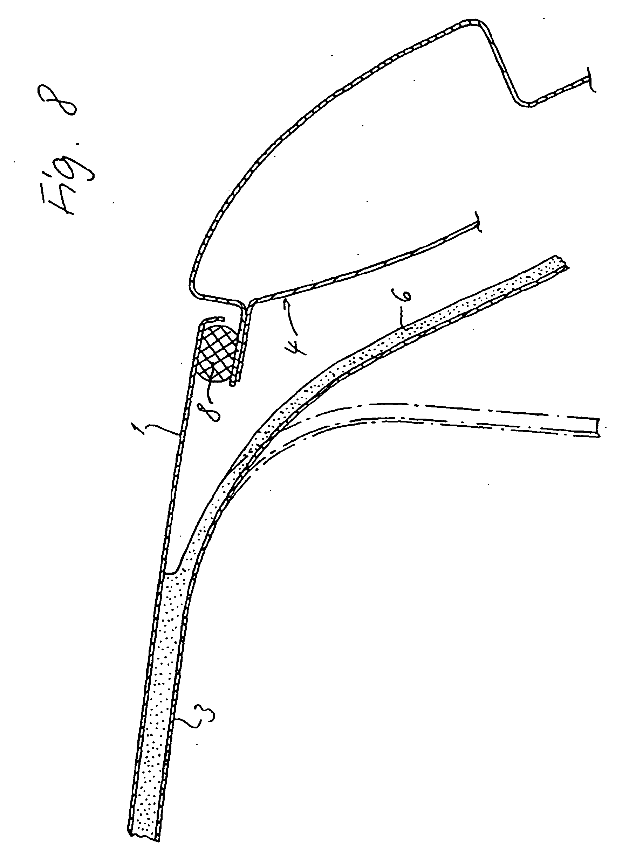

Zur näheren Erläuterung eines weiteren Fakrzeugdachs, das nicht zur Erfindung gehört wird nunmehr auf die Fig. 6 bis 8 Bezug genommen, wobei aber lediglich auf die bestehenden Unterschiede zu den Fig. 3 bis 5 hingewiesen werden soll. Während bei dem Dach der Fig. 3 bis 5 die Innenfläche der Dachhaut 1 vollständig ausgeschäumt ist, befindet sich bei dem Fakrzeugdach der Fig. 6 bis 8 im Bereich der zur Auflage auf den Karosserierahmen 4 bestimmten Außenränder der starren Dachhaut 1 keine Ausschäumung. Die obere Schicht 5 endet vorn und hinten (Fig. 6 und 7) mit Abstand vor den Außenrändern des Fahrzeugdachs, kann in diesem Bereich aber auch völlig fehlen, so daß aus der Innenschale 2 lediglich eine dünnere untenliegende Schicht 6 weitergeführt ist, wie das aus Fig. 8 hervorgeht. Jedenfalls ist die unterhalb der Dachhaut 1 befindliche Innenschale im Bereich der Auflage auf den Karosserierahmen 4 nicht mit der Dachhaut 1 verbunden. Die über die Außenränder des Fahrzeugdachs überstehende Innenschale ist wiederum für den Durchtritt durch die von dem Karosserierahmen 4 begrenzte Karosserieöffnung nach unten ohne bleibende Deformation umbiegbar und dient der bereits, beschriebenen Verkleidung des Karosserierahmens 4. Während bei dem Dach gemäß der Fig. 3 bis 5 eine feste Dachhaut 1 nicht unbedingt erforderlich ist, wenn die Innenschale 2 genügend Formstabilität aufweist, ist bei dem Fahrzeugdach nach den Fig. 6 bis 8 eine starre tragende Dachhaut 1 zwingend erforderlich. Die Verbindung der Dachhaut 1 und damit des gesamten Fahrzeugdachs mit dem Karosserierahmen 4 übernimmt auch hier in Raupen aufgetragener Klebstoff 8. Bei dem Fahrzeugdach ist in Fig. 6 an der Teilungsstelle von oberer Schicht 5 und unterer Schicht 6 angedeutet, daß an den Umbiegungs- oder Knickstellen auf der der Himmelfläche abgelegenen Seite kerbenähnliche Vertiefungen 24 vorgesehen sein können, welche das vorübergehende Abbiegen der unteren Schicht 6 wesentlich erleichtern. Entsprechende Vertiefungen können auch bei den anderen Ausführungsformen vorgesehen sein.

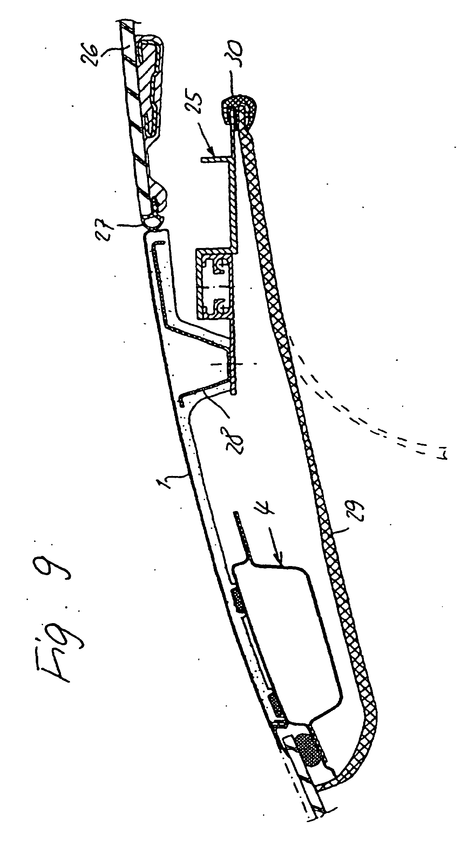

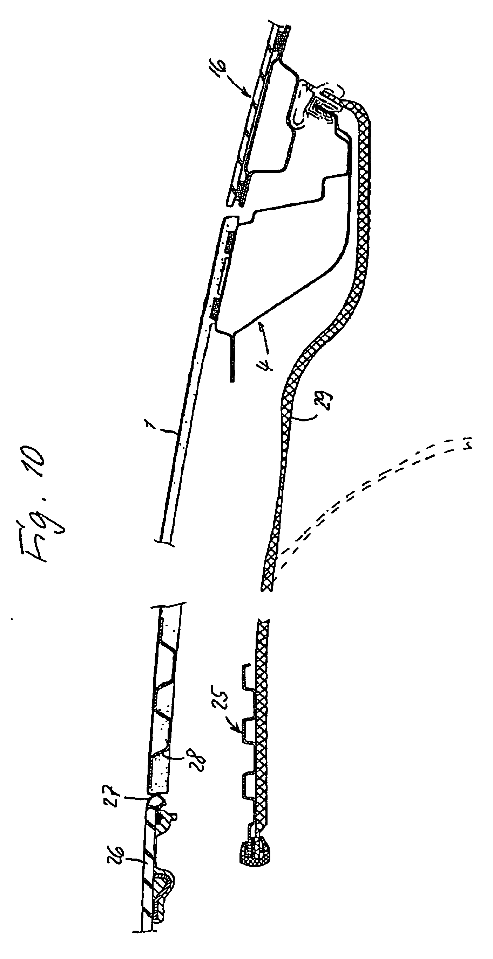

Das erfindungsgemäße Fahrzeugdach wird nunmehr anhand der Fig. 9 bis 12 näher beschrieben. Die Besonderheit dieser Ausführungsform besteht darin, daß sich in dem Fahrzeugdach eine vormontierte Schiebedacheinheit befindet. Von dieser sind in den genannten Fig. im wesentlichen der Schiebedachrahmen 25, der beispielsweise als Glasdeckel ausgebildete Schiebedeckel 26, das Randspaltabdichtungsprofil 27 und ein die in der festen Dachhaut 1 angebrachte Dachöffnung umgebender Verstärkungsrahmen 28 dargestellt. Im gezeichneten Beispiel ist die feste Dachhaut 1 ausgeschäumt und auf die schon beschriebene Weise mit ihren Randbereichen auf den Karosserierahmen 4 aufgelegt und damit fest verbunden. Bei dieser Ausführungsform ist der als Innenschale 29 vorgeformte Dachhimmel mit Abstand zu der starren Dachhaut 1 an dem unterhalb der Dachhaut 1 befestigten Schiebedachrahmen 25 angebracht. Die wiederum über die Außenränder des Fahrzeugdachs überstehende Innenschale 29 ist für den Durchtritt durch die von dem Karosserierahmen 4 begrenzte Karosserieöffnung nach unten ohne bleibende Deformation umbiegbar und zur Verkleidung des Karosserierahmens 4 und des Schiebedachrahmens 25 ausgebildet. Während die Anbringung und Befestigung der Innenschale 29 an dem Karosserierahmen 4 auf die schon beschriebene Weise erfolgt, übernimmt die Befestigung der Innenschale 29 an dem Schiebedachrahmen 25 ein Aufsteckkeder 30, der sowohl auf einen Flansch des Schiebedachrahmens 25 als auch auf den Öffnungsrand der Innenschale 29 aufgesteckt ist, wie das aus den Fig. 9, 10 und 12 hervorgeht. In diesen Fig. ist auch die nach unten umgebogene Montagelage der Innenschale 29 in strichpunktierten Linien dargestellt. Während in den Fig. 9, 10 und 12 durch Weglassen des Bezugsmaterials 3 angedeutet ist, daß die Innenschale 29 an ihrer dem Fahrzeuginnenraum zugekehrten Fläche auch ohne Bezugsmaterial ausgeführt sein kann, veranschaulicht die zu dieser Ausführungsform gehörende Fig. 11 aber, daß auch hier Bezugsmaterial 3 vorhanden sein kann.

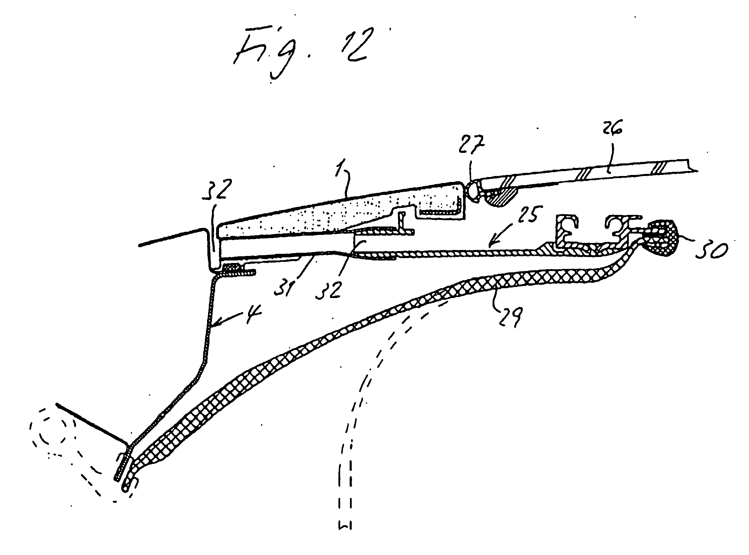

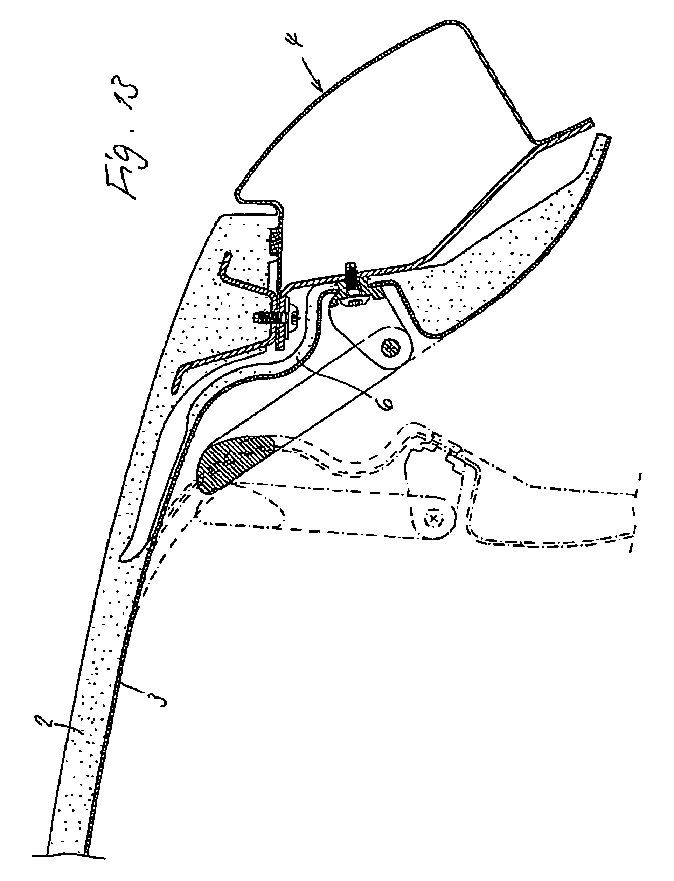

Aus Fig. 12 geht hervor, auf welche Weise über den Randspalt zwischen der festen Dachhaut 1 und dem Schiebedeckel 26 eintretendes und von dem Schiebedachrahmen 25 aufgefangenes Wasser nach außen abgeleitet werden kann. Zu diesem Zweck ist in der an der Unterseite der festen Dachhaut 1 angebrachten Schaumschicht ein Schlauch- oder Rohrstück 31 eingebettet, das einerseits auf eine Abflußtülle 32 des Schiebedachrahmens 25 dicht aufgesteckt ist und andererseits mit einer Öffnung an der Außenkante des Fahrzeugdachs endet. Hier mündet das Schlauchoder Rohrstück 31 in eine Wasserablauffuge 32, die zwischen dem Außenrand der Dachhaut und der ihm zugekehrten Fläche des Karosserierahmens 4 gebildet ist. eines weiteres, nicht zur Erfindung gehörendes Fahrzeugdach ist in Fig. 13 dargestellt und entspricht im wesentlichen demschon unter Bezugnahme auf die Fig. 3 bis 5 ausführlich beschriebenen Fahrzeugdach. Im unterschied dazu besitzt hier das Fahrzeugdach keine feste Dachhaut. Hier besteht das Fahrzeugdach im wesentlichen aus einem harten schalenförmig geformten Schaumkunststoff mit glatter lackierbarer Außenfläche. Selbstverständlich können in den Schaumkunststoff noch-zusätzliche in Querrichtung aber auch in Längsrichtung geführte Verstärkungen eingebettet sein. Die Innenschale 2 ist zugleich Außenschale.

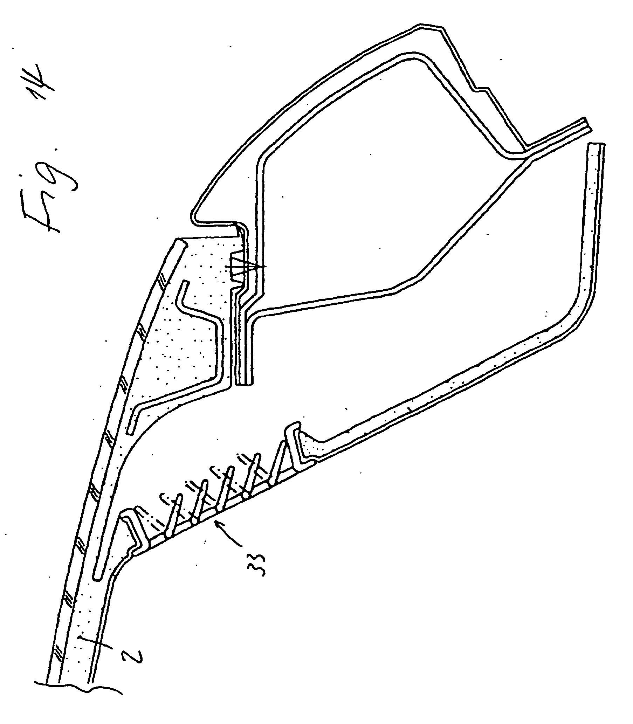

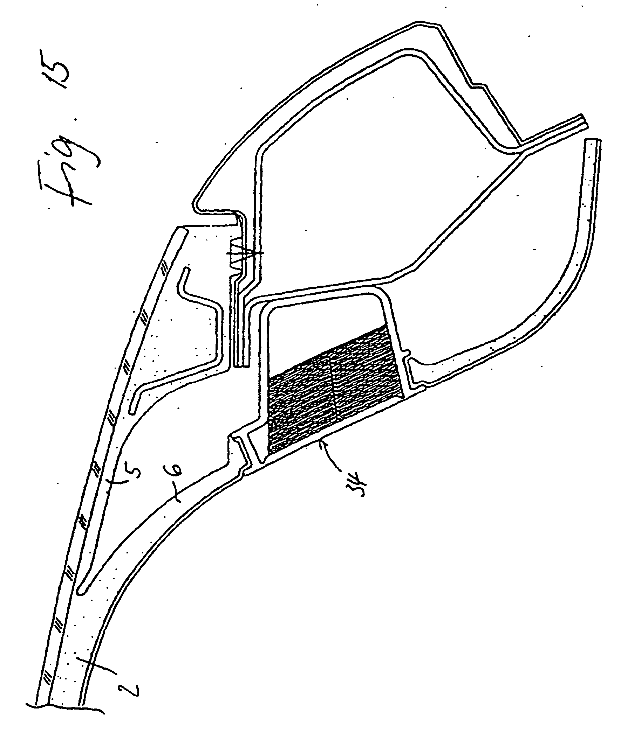

Ein weiteres, nicht zur Erfindung gehörendes Fahrzeugdach ist den Fig. 14 und 15 zu entnehmen. Dieses unterscheidet sich nicht grundsätzlich von dem mit Bezug auf die Fig. 3 bis 5 beschriebenen Dach, mit der Ausnahme, daß hier die dünne Dachhaut 1 ersetzt ist durch eine dickere aus einem transparenten Kunststoff oder Glas gebildete Dachhaut. In diesen Fig. ist aber auch dargestellt, daß an der unteren Schicht 6 nicht nur Sonnenblenden oder Haltegriffe vormontiert werden können, sondern auch Lüftungsgitter 33 (Fig. 14) und sogar Airbags 34 (Fig. 15). Entsprechendes gilt auch für des mit Bezug auf die Fig. 9 bis 12 beschriebene Fahrzeugdach. Hierbei sind dann die vormontierten Elemente wie Sonnenblenden, Haltegriffe, Lüftungsgitter, stoßabsorbierende Sicherheitselemente, Airbags und dgl. an der Innenschale 29 vormontiert.

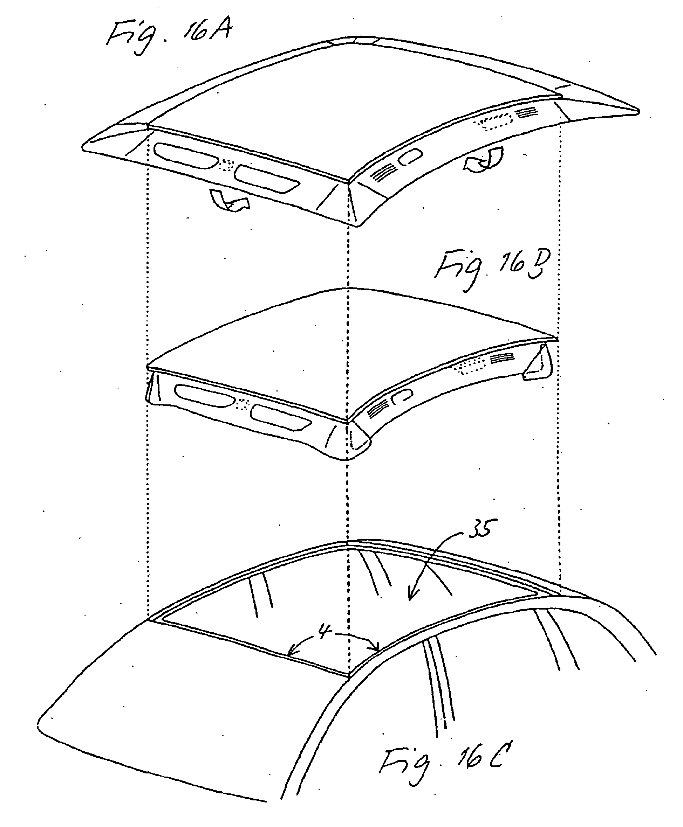

Das Montageverfahren für das beschriebene Fahrzeugdach obenfalls nicht Bestandteil der Erfindung, das für alle Ausführungsformen des Fahrzeugdachs gleich ist, wird nachfolgend anhand der Fig. 16A bis 16C beschrieben. Das getrennt von der übrigen Fahrzeugkarosserie hergestellte Fahrzeugdach mit allen seinen an der Innenschale vormontierten Elementen hat zunächst etwa das in Fig. 16A dargestellte Aussehen. Deutlich sind die über den Außenrand des Fahrzeugdachs vorstehenden Bereiche der Innenschale zu erkennen. Nunmehr wird die über die Außenränder des Fahrzeugdachs überstehende Innenschale bzw. die untere Schicht der Innenschale unter partieller Faltung in den Eckbereichen nach unten umgebogen, wie das Pfeile in Fig. 16A verdeutlichen. Hierbei erfolgt eine nichtbleibende Deformation und in den Eckbereichen auch eine partielle Faltung der überstehenden Innenschale bzw. der unteren Schicht der Innenschale. Danach hat das Fahrzeugdach etwa die in Fig. 16B dargestellte Form eingenommen. Zur Erleichterung des Einführens der nun gewissermaßen schürzenähnlich herabhängenden Bereiche der Innenschale bzw. der unteren Schicht der Innenschale in die von dem Karosserierahmen 4 gebildete Karosserieöffnung 35 können die herabhängenden Bereiche und damit die umgebogene Lage dieser Bereiche vorübergehend durch ein umfänglich herumgelegtes Band, eine Schnur od. dgl. fixiert werden. Nach dem Aufsetzen des Fahrzeugdachs auf den Karosserierahmen 4 erfolgt zunächst die Befestigung des Fahrzeugdachs am Karosserierahmen, wobei die vorübergehende Fixierung noch beibehalten werden kann. Danach wird die Fixierung ggf. aufgehoben, die Innenschale bzw. die untere Schicht der Innenschale mit ihren zur Verkleidung des Karosserierahmens 4 ausgebildeten Bereichen zurückgebogen, an die nach unten bzw. innen weisenden Flächen des Karosserierahmens angelegt und schließlich ebenfalls am Karosserierahmen befestigt, wie das im einzelnen anhand der Schnittdarstellungen erläutert worden ist.

Entsprechend dem beschriebenen Verfahren.zur Montage des Fahrzeugdachs an einem Karosserierahmen ist also vorgesehen, daß
(a) die über die Außenränder des Fahrzeugdachs überstehende Innenschale bzw. die untere Schicht der Innenschale unter partieller Faltung in den Eckbereichen nach unten umgebogen wird,
(b) das Fahrzeugdach unter Durchtritt der umgebogenen Bereiche der Innenschale durch den Karosserierahmen 4 hindurch mit seinen Außenrändern von oben dem Karosserierahmen 4 aufgelegt und daran befestigt wird, und
(c) die Innenschale mit ihren zur Verkleidung des Karosserierahmens 4 ausgebildeten Bereichen zurückgebogen, an die nach unten bzw. innen weisenden Flächen des Karosserierahmens 4 angelegt und dann am Karosserierahmen 4 befestigt wird.

Das Montageverfahren läßt sich dabei noch weiter dadurch verbessern, daß die umgebogene Lage der davon betroffenen Bereiche der Innenschale vorübergehend fixiert wird und die Fixierung nach Durchtritt der umgebogenen Bereiche durch den Karosserierahmen 4 und Befestigung des Fahrzeugdachs an dem Karosserierahmen 4 aufgehoben wird. Für die vorübergehende Fixierung ist es beispielsweise ausreichend, wenn die nach unten umgebogenen Bereiche der Innenschale durch ein um diese Bereiche von außen herumgelegtes flexibles Band oder ein Seil od. dgl. zusammengeschnürt werden.

Allen beschriebenen Fahrzeugdächer ist gemeinsam, daß das Fahrzeugdach mit einer vorgeformten den Dachhimmel bildenden Innenschale 2 ausgebildet ist mit der Besonderheit, daß diese über die Außenränder des Fahrzeugdachs allseits übersteht, auch an den Ecken, d.h. größer ist als die Innenabmessungen der von den Holmen oder Profilen des geschlossenen Karosserierahmens 4 begrenzten Karosserieöffnung 35, und daß der Dachhimmel an den überstehenden Bereichen so flexibel oder elastisch ist, daß er für den Durchtritt durch die von dem Karosserierahmen 4 begrenzte Karosserieöffnung 35 unter partieller Faltung in den Eckbereichen nach unten ohne bleibende Deformation umbiegbar und zur Verkleidung des Karosserierahmens 4 ausgebildet ist. Die überstehenden Bereiche des Dachhimmels bilden somit die Verkleidungen für die Dachrahmenprofile, so daß zusätzliche Abdeckleisten und Abdeckprofile auch an den Ecken nicht erforderlich sind. Das getrennt hergestellte Fahrzeugdach bringt in einteiliger Ausbildung schon alle Elemente mit, die nach dem Aufsetzen und Befestigen des Fahrzeugdachs auf den bzw. an dem Karosserierahmen 4 zur Verkleidung der Sichtflächen des Karosserierahmens 4 erforderlich sind. Dabei geht der eigentliche Dachhimmel fugenlos in seine der Dachrahmenverkleidung dienenden Bereiche über. Infolge der Einteiligkeit des modulartig getrennt hergestellten Fahrzeugdachs mit den Verkleidungsbereichen seines Himmels werden daher nicht nur kurze Montagezeiten am Endmontageband ermöglicht, sondern darüber hinaus eine fugenlose harmonische Gestaltung des gesamten Dachhimmels auch in seinen Übergangsflächen zu den verglasten Flächen der Kraftfahrzeugkarosserie, d.h. zu der Windschutzscheibe, den Seitenfenstern und dem Heckfenster, und auch in seinen Eckbereichen erzielt.

Das Fahrzeugdach, bei dem die Innenschale 2 im Bereich der zur Auflage auf den Karosserierahmen 4 vorgesehenen Außenränder in zwei Schichten 5, 6 aufgeteilt ist, von denen die obere Schicht 5 auf den Karosserierahmen 4 auflegbar ist, während die untere Schicht 6 über die Außenränder des Fahrzeugdachs übersteht, für den Durchtritt durch die von dem Karosserierahmen 4 begrenzte Karosserieöffnung 35 unter partieller Faltung in den Eckbereichen nach unten ohne bleibende Deformationen umbiegbar und zur Verkleidung des Karosserierahmens 4 ausgebildet ist (Fig. 3 bis 5 und 13), ist in zwei Ausführungsformen möglich. Zum einen kann es mit einer äußeren Dachhaut 1, vorzugsweise einer starren Dachhaut, die beispielsweise aus Stahlblech geformt ist, versehen sein (Fig. 3 bis 5), zum anderen kann es aus einem geeigneten Hartschaum ohne äußere Dachhaut geformt sein (Fig. 13). Im letzteren Fall läßt sich die Außenseite so lackieren wie Karosserieblech.

Das Fahrzeugdach, bei dem die Innenschale 2 außen mit einer starren Dachhaut 1 versehen ist, deren Außenränder zur Auflage auf den Karosserierahmen 4 vorgesehen sind, während die unterhalb der Dachhaut 1 befindliche Innenschale 2 im Bereich der Auflage auf den Karosserierahmen 4 nicht mit der Dachhaut 1 verbunden ist, über die Außenränder des Fahrzeugdachs übersteht, für den Durchtritt durch die von dem Karosserierahmen 4 begrenzte Karosserieöffnung 35 unter partieller Faltung in den Eckbereichen nach unten ohne bleibende Deformationen umbiegbar und zur Verkleidung des Karosserierahmens 4 ausgebildet ist (Fig. 6 bis 8), setzt dagegen das Vorhandensein einer starren Dachhaut 1 voraus, deren Außenränder unmittelbar, d.h. ohne zwischenliegende Schaumschicht, auf den Dachrahmen auflegbar und daran zu befestigen sind.

Das Fahrzeugdach, bei dem der als Innenschale 29 vorgeformte Dachhimmel mit Abstand zu einer starren Dachhaut 1 an einem unterhalb der Dachhaut befestigten Schiebedachrahmen 25 angebracht ist, über die Außenränder des Fahrzeugdachs übersteht, für den Durchtritt durch die von dem Karosserierahmen 4 begrenzte Karosserieöffnung 35 unter partieller Faltung in den Eckbereichen nach unten ohne bleibende Deformationen umbiegbar und zur Verkleidung des Karosserierahmens 4 und des Schiebedachrahmens 25 ausgebildet ist (Fig. 9 bis 12), kann schließlich mit einer bereits funktionsfähig vormontierten Schiebedacheinheit versehen sein. Der als Innenschale 29 vorgeformte Dachhimmel ist hierbei an der Unterseite des Schiebedachrahmens 25 befestigt. Die Innenfläche der Dachhaut 1 kann in den an die Schiebedachöffnung angrenzenden Bereichen zur Verbesserung der Schall- und Wärmeisolation zusätzlich mit Schaumstoff beschichtet sein.

Für die Formung der Innenschale 2, 29 eignen sich PUR-Schaumstoffe, die für die vorliegenden Zwecke ausreichend flexibel oder sogar elastisch einstellbar sind. Sollknickstellen, die das vorübergehende Umbiegen nach unten und die Faltung an den vier Ecken des Fahrzeugdachs erleichtern, können vorgesehen sein. So kann die aus einem PUP-Schaumstoff geformte Innenschale 2, 29 an den Umbiegungs- oder Knickstellen auf der der Himmelfläche abgelegenen Seite mit kerbenähnlichen Vertiefungen 24 versehen sein (Fig. 6). Für diejenigen Bereiche der Innenschale 2, für die eine Flexibilität nicht erforderlich ist, können auch härtere Schaumstoffe zur Anwendung gelangen. Dies gilt insbesondere für den Fall, daß das Fahrzeugdach keine starre tragende Außenhaut 1 aufweist.

Weiterhin können die nach unten umbiegbaren Bereiche der Innenschale 2, 29 an den dafür geeigneten Orten mit mindestens einem vormontierten Element aus der aus Sonnenblenden 12 (Fig. 3 und 6), Haltegriffen 21 (Fig. 5 und 11), Lüftungsgittern 33 (Fig. 14), Innenleuchten, stoßabsorbierenden Sicherheitselementen 23 (Fig. 4 und 5), Airbags 34 (Fig. 15) und dgl. bestehenden Gruppe bzw. mit vorbereiteten Anbringungsorten für mindestens eines dieser Elemente versehen sein. Hierdurch wird der Montageaufwand am Montageband noch weiter vereinfacht, weil sich entweder die betreffenden Elemente leicht an dafür vorgesehenen Stellen anbringen lassen oder sogar schon an dem modulartigen Fahrzeugdach vormontiert vorhanden sind.

Im Interesse einer möglichst umfassenden Vorfertigung des Fahrzeugdachs ohne das Erfordernis nachträglicher Anpassungsarbeiten an den Karosserierahmen 4 können vorteilhaft die Außenränder der nach unten umbiegbaren Bereiche der Innenschale 2, 29 zur Befestigung an Flanschrändern des Karosserierahmens 4 mittels Kunststoffprofilstreifen, Keder od. dgl. 15 entsprechend paßgerecht beschnitten bzw. vorgeformt sein (Fig. 4 und 7). Ein so vorbereitetes Fahrzeugdach kann an allen vier Seiten ohne weiteres mit dem Karosserierahmen 4 vereinigt werden.

Soll das Fahrzeugdach ausschließlich oder zusätzlich zu Schraubverbindungen durch Kleben mit dem Karosserierahmen 4 vereinigt werden, so sind die Dachränder zweckmäßig so zu gestalten, daß sie in ihren zur Auflage auf den Karosserierahmen 4 vorgesehenen Bereichen mit im Schaumstoff eingeformten Aufnahmenuten 7 für Klebstoff versehen sind (Fig. 3 und 4).

Die Dachränder können in ihren zur Auflage auf den Karosserierahmen 4 vorgesehenen Bereichen mit in den Schaumstoff eingebetteten Verstärkungsteilen 17 versehen sein (Fig. 5 und 11), die für eine Aussteifung des Fahrzeugdachs sorgen und damit nicht nur der Transport- und Handhabungsfähigkeit des vormontierten Fahrzeugdachs, sondern auch zu seiner Versteifung nach der Montage am Karosserierahmen 4 dienen. Die hierfür vorgesehenen im Schaumstoff eingebetteten Verstärkungsteile 17 müssen nicht vollständig vom Schaumstoff umhüllt sein, sondern können mit ihren unteren Flächen freiliegen, so daß sie dem Karosserierahmen 4 unmittelbar zur Befestigung flächig aufgelegt werden können bzw. mit ihrer unteren Fläche unmittelbar flächig anliegen.

Bei Ausbildung des Fahrzeugdachs mit einem Schiebedach kann über den Randspalt zwischen der festen Dachhaut 1 und dem Schiebedeckel 26 eintretendes und von dem Schiebedachrahmen 25 aufgefangenes Wasser nach außen abgeleitet werden, wozu dann ein im Eckbereich des Schiebedachrahmens 25 in die an der Unterseite der festen Dachhaut 1 angebrachten Schaumschicht eingebettetes Schlauch- oder Rohrstück 31 vorgesehen ist (Fig. 12), das einerseits auf eine Abflußtülle 32 des Schiebedachrahmens 25 dicht aufgesteckt ist und andererseits mit einer Öffnung an der Außenkante des Fahrzeugdachs endet. Zweckmäßig mündet das Schlauch- oder Rohrstück 31 an der Außenkante des Fahrzeugdachs in eine Wasserablauffuge, die zwischen dem Außenrand der Dachhaut 1 und der ihm zugekehrten Fläche des Karosserierahmens 4 gebildet ist.

Es wird ein Fahrzeugdach, insbesondere Kraftfahrzeugdach offenbart, das sandwichartig mit einer Dachhaut ausgebildet, getrennt von der Fahrzeugkarosserie hergestellt, mit seinen Dachrändern auf einen Karosserierahmen auflegbar und mit diesem fest verbindbar ist. Erfindungsgemäß ist die mit einer Dachöffnung versehene Dachhaut mit einem Schaumkunststoff ausgeschäumt, wobei in dem Schaumkunststoff ein die Dachöffnung umgebender Verstärkungsrahmen eingebettet ist, an dem ein Schiebedachrahmen befestigt ist. Im Ergebnis wird ein eine schnelle und leichte Montage einer Schiebedacheinheit gestattendes Fahrzeugdach geschaffen, welches einfach ausgebildet und herstellbar ist.

## Patentansprüche

1. Fahrzeugdach, insbesondere Kraftfahrzeugdach, das sandwichartig mit einer Dachhaut (1) ausgebildet, getrennt von der Fahrzeugkarosserie herstellbar, mit seinen Dachrändern auf einen Karosserierahmen (4) auflegbar und mit diesem fest verbindbar ist, **dadurch gekennzeichnet, daß** die mit einer Dachöffnung versehene Dachhaut (1) mit einem Schaumkunststoff ausgeschäumt ist, wobei in dem Schaumkunststoff ein die Dachöffnung umgebender Verstärkungsrahmen (28) eingebettet ist, an dem unterhalb der Dachhaut ein Schiebedachrahmen (25) befestigt ist,
an welchem ein als Innenschale (29) vorgeformter Dachhimmel angebracht ist, der über die Außenränder des Fahrzeugdachs übersteht, für den Durchtritt durch die von dem Karosserierahmen (4) begrenzte Karosserieöffnung (35) unter partieller Faltung in den Eckbereichen nach unten ohne bleibende Deformationen umbiegbar und zur Verkleidung des Karosserierahmens (4) und des Schiebedachrahmens (25) ausgebildet ist.

2. Fahrzeugdach nach Anspruch 1, **dadurch gekennzeichnet, daß** der Schiebedachrahmen (25) einen Flansch aufweist, der an einer unteren Fläche des Verstärkungsrahmens (28) unmittelbar flächig anliegt und der Befestigung des Schiebedachrahmens (25) an dem Verstärkungsrahmen (28) dient.

3. Fahrzeugdach nach Anspruch 1 oder 2, **dadurch gekennzeichnet, daß** die Innenschale (29) an dem Schiebedachrahmen (25) mittels eines Aufsteckkeders (30) befestigt ist, der sowohl auf einen Flansch des Schiebedachrahmens (25) als auch auf einen Öffnungsrand der Innenschale (29) aufgesteckt ist.

4. Fahrzeugdach nach einem der vorhergehenden Ansprüche, **dadurch gekennzeichnet, daß** über einen Randspalt zwischen der Dachhaut (1) und einem Schiebedeckel (26) eintretendes und von dem Schiebedachrahmen (25) aufgefangenes Wasser nach außen abgeleitet wird, durch ein In einem Eckbereich des Schiebedachrahmens (25) in die an der Unterseite der Dachhaut (1) angebrachten Schaumschicht eingebettetes Schlauch- oder Rohrstück (31), das einerseits auf eine Abflußtülle (32) des Schiebedachrahmens (25) dicht aufgesteckt ist und andererseits mit einer Öffnung an einer Außenkante des Fahrzeugdachs endet.

5. Fahrzeugdach nach Anspruch 4, **dadurch gekennzeichnet, daß** das Schlauch- oder Rohrstück (31) an der Außenkante des Fahrzeugdachs in eine Wasserablauffuge mündet, die zwischen einem Außenrand der Dachhaut (1) und der ihm zugekehrten Fläche des Karosserierahmens (4) gebildet ist.

6. Fahrzeugdach nach einem der vorhergehenden Ansprüche, **dadurch gekennzeichnet, daß** die Dachränder in ihren zur Auflage auf den Karosserierahmen (4) vorgesehenen Bereichen mit in den Schaumkunststoff eingebetteten Verstärkungsteilen (17) in Form von vorzugsweise durchgehenden Profilen versehen sind, um für eine Aussteifung des Fährzeugdachs zu sorgen.

7. Fahrzeugdach nach Anspruch 6, **dadurch gekennzeichnet, daß** das jeweilige Verstärkungsteil (17) mit einer unteren freiliegenden Fläche an dem Karosserierahmen (4) unmittelbar flächig anliegt.

8. Fahrzeugdach nach Anspruch 6 oder 7, **dadurch gekennzeichnet, daß** das Fahrzeugdach mit dem Karosserierahmen (4) durch Befestigungsschrauben (18) fest verbunden ist, die durch einen Flansch des Karosserierahmens (4) hindurchgeführt und In das jeweilige Verstärkungsteil (17) eingeschraubt sind.

9. Fahrzeugdach nach einem der vorhergehenden Ansprüche, **dadurch gekennzeichnet, daß** es sich bei dem Schaumkunststoff um einen PUR-Schaumstoff handelt:

## Claims

1. Vehicle roof, particularly motor vehicle roof, which is constructed in sandwich-like manner with a roof membrane (1), manufacturable separately from the vehicle body, which can be placed with its roof edges on a body frame (4) and is firmly joinable therewith, **characterized in that** the roof membrane (1) provided with a roof opening is foamed with foamed plastic, wherein a reinforcing frame (28) surrounding the roof opening is embedded in the foamed plastic, a sliding roof frame (25) being fixed to the reinforcing frame below the roof membrane, to which sliding roof frame is fitted a roof lining preshaped an an inner shell (29), the roof lining projecting over the outer edges of the vehicle roof, for passage through the body opening (35) bounded by the body frame (4), accompanied by partial folding in the corner areas, being bendable downwards without permanent deformation and formed for covering the body frame (4) and the sliding roof frame (25).

2. Vehicle roof according to claim 1, **characterized in that** the sliding roof frame (25) has a flange, which engages in a direct, flat manner on a lower surface of the reinforcing frame (28) and is used for fixing the sliding roof frame (25) to the reinforcing frame (28).

3. Vehicle roof according to claim 1 or 2, **characterized in that** the inner shell (29) is fixed to the sliding roof frame (25) by means of a slip-on beading (30), which is slipped onto both a flange of the sliding roof frame (25) and onto an opening rim of the inner shell (29).

4. Vehicle roof according to one of the preceding claims, **characterized in that** water entering via a marginal gap between the roof membrane (1) and a sliding top (26) and which is collected by the sliding roof frame (25) is led off outwards by a hose or tube portion (31) embedded in a corner region of the sliding roof frame (25) in the foam layer fitted to the underside of the roof membrane (1), which is on the one hand tightly engaged on a discharge bush (32) of the sliding roof frame (25) and on the other hand ends with an opening on an outer edge of the vehicle roof.

5. Vehicle roof according to claim 4, **characterized in that** the hose or tube portion (31) at the outer edge of the vehicle roof opens into a water draining gap, which is formed between an outer edge of the roof membrane (1) and the surface of the body frame (4) which faces it.

6. Vehicle roof according to one of the preceding claims, **characterized in that** in their areas intended for resting on the body frame (4), the roof edges are provided with reinforcing parts (17) embedded in the foamed plastic and which are in the form of preferably through profiles, in order to ensure a stiffening of the vehicle roof.

7. Vehicle roof according to claim 6, **characterized in that** the respective reinforcing part (17) with a lower, exposed surface engages in a direct, flat manner on the body frame (4).

8. Vehicle roof according to claim 6 or 7, **characterized in that** the vehicle roof is firmly joined to the body frame (4) by fixing screws (18), which are passed through a flange of the body frame (4) and are screwed into the respective reinforcing part (17).

9. Vehicle roof according to one of the preceding claims, **characterized in that** the foamed plastic is a PUR foam.

## Revendications

1. Toit de véhicule, en particulier toit de véhicule automobile qui, formé selon une construction sandwich d'une couverture (1), est apte à être fabriqué séparément par rapport à la carrosserie, est apte à être posé avec ses bords sur un cadre de carrosserie (4) et est apte à être relié solidement à celui-ci, **caractérisé en ce que** la couverture (1) pourvue d'une ouverture de toit est garnie d'une matière plastique alvéolaire, étant précisé qu'il est prévu, encastré dans la matière plastique alvéolaire, un châssis de renforcement (28) qui entoure l'ouverture de toit, auquel est fixé, au-dessous de la couverture (1), un châssis de toit coulissant (25) et sur lequel est installé un garnissage de toit préformé sous la forme d'un revêtement intérieur (29) qui dépasse des bords extérieurs du toit de véhicule, est apte à être recourbé vers le bas, sans déformations durables, moyennant un pliage partiel dans les zones d'angle afin de passer à travers l'ouverture de carrosserie (35) délimitée par le cadre de carrosserie (4) et est conçu pour revêtir le cadre de carrosserie (4) et le châssis de toit coulissant (25).

2. Toit de véhicule selon la revendication 1, **caractérisé en ce que** le châssis de toit coulissant (25) présente une aile qui est appliquée directement à plat contre une surface inférieure du châssis de renforcement (28) et qui sert à la fixation du châssis de toit coulissant (25) au châssis de renforcement (28).

3. Toit de véhicule selon la revendication 1 ou 2, **caractérisé en ce que** le revêtement intérieur (29) est fixé au châssis de toit coulissant (25) à l'aide d'un bourrelet à emboîter (30) qui est emboîté non seulement sur une aile du châssis de toit coulissant (25), mais aussi sur un bord d'ouverture du revêtement intérieur (29).

4. Toit de véhicule selon l'une des revendications précédentes, **caractérisé en ce que** l'eau qui entre par un interstice du bord, entre la couverture (1) et un couvercle coulissant (26), et qui est reçue par le châssis de toit coulissant (25) est évacuée vers l'extérieur grâce à un élément en forme de tuyau ou de tube (31) qui est encastré, dans une zone d'angle du châssis de toit coulissant (25), dans la couche de mousse prévue sur le côté inférieur de la couverture (1), qui est enfilé de manière étanche sur un bec d'écoulement (32) du châssis de toit coulissant (25), d'un côté, et qui se termine par une ouverture sur un bord extérieur du toit de véhicule, de l'autre côté.

5. Toit de véhicule selon la revendication 4, **caractérisé en ce que** l'élément en forme de tuyau ou de tube (31) débouche, sur le bord extérieur du toit de véhicule, dans une rainure d'écoulement d'eau qui est formée entre un bord extérieur de la couverture (1) et la surface du cadre de carrosserie (4) tournée vers ce bord extérieur.

6. Toit de véhicule selon l'une des revendications précédentes, **caractérisé en ce que** les bords du toit sont pourvus, dans leurs zones destinées à être posées sur le cadre de carrosserie (4), d'éléments de renforcement (17) encastrés dans la matière plastique alvéolaire qui ont la forme de profilés de préférence continus afin d'assurer un raidissement du toit de véhicule.

7. Toit de véhicule selon la revendication 6, **caractérisé en ce que** chaque élément de renforcement (17) est appliqué directement à plat, avec une surface libre inférieure, contre le cadre de carrosserie (4).

8. Toit de véhicule selon la revendication 6 ou 7, **caractérisé en ce que** le toit de carrosserie est fixé solidement au cadre de carrosserie (4) à l'aide de vis de fixation (18) qui traversent une aile du cadre de carrosserie (4) et qui sont vissées dans les éléments de renforcement respectifs (17).

9. Toit de véhicule selon l'une des revendications précédentes, **caractérisé en ce que** la matière plastique alvéolaire est constituée par une mousse PUR.
